# EUROPEAN PATENT APPLICATION

(11) **EP 4 799 758 A1**
(43) Date of publication of application: **02.09.2026**
(21) Application number: 24917005.1
(22) Date of filing: 06.12.2024
(51) Int. Cl.: B23Q 15/00, G05B 19/4069, G05B 19/4093, G05B 19/4097

(54) **INFORMATION PROCESSING DEVICE, MANUFACTURING CYCLE ALLOCATION METHOD, AND PROGRAM**

(30) Priority: 09.01.2024 JP 2024001268; 24.05.2024 JP 2024084464
(71) Applicant: DMG Mori Co., Ltd., Nara-shi, Nara 630-8122 (JP)
(72) Inventor: UKITA, Yuki, Sapporo-shi, Hokkaido 004-0015 (JP)
(74) Representative: Isarpatent
(86) International application number: PCT/JP2024/043257
(87) International publication number: WO 2025/150320

(57) **Abstract**

An information processing apparatus (100) includes a receiving unit (111) that receives a three-dimensional model (400) of a workpiece extending about a predetermined axis (310), and a processing unit (120) that generates a two-dimensional model (500) obtained by cutting the three-dimensional model (400) along a plane including the predetermined axis (310) and that assigns a machining cycle to the workpiece based on a contour shape of the workpiece appearing in the two-dimensional model (500).

## Description

### TECHNICAL FIELD

The present invention relates to an information processing apparatus, a method of assigning a machining cycle, and a program.

### BACKGROUND ART

For example, Japanese Patent Laying-Open No. 2014-16982 (PTL 1) discloses a simulation apparatus for enabling check of blocks (movement commands) included in a machining cycle in display of a moving image of machining operations of a machining program including machining cycle commands.

### CITATION LIST

### PATENT LITERATURE

PTL 1: Japanese Patent Laying-Open No. 2014-16982

### SUMMARY OF INVENTION

### TECHNICAL PROBLEM

As disclosed in PTL 1 described above, during generation of a numerically controlled (NC) program for machining a workpiece, for example, a process of machining the workpiece is assigned machining cycles (turning cycles) such as outer diameter machining, inner diameter machining, end face machining, groove machining, or thread machining, and subsequently, the NC program is generated using codes that command these machining cycles as fixed cycles.

However, since the machining cycles described above are assigned manually by an operator, a great deal of time may be required for the assignment of the machining cycles, or the machining cycles may not be appropriately assigned.

An object of the present invention is to provide an information processing apparatus, a method of assigning a machining cycle, and a program that easily and appropriately assign machining cycles.

### SOLUTION TO PROBLEM

An information processing apparatus according to the present invention includes a receiving unit that receives a three-dimensional model of a workpiece extending about a predetermined axis, and a processing unit that generates a two-dimensional model obtained by cutting the three-dimensional model along a plane including the predetermined axis and that assigns a machining cycle to the workpiece based on a contour shape of the workpiece appearing in the two-dimensional model.

A method of assigning a machining cycle according to the present invention includes: generating, from a three-dimensional model of a workpiece extending about a predetermined axis, a two-dimensional model obtained by cutting the three-dimensional model along a plane including the predetermined axis; and assigning a machining cycle to the workpiece based on a contour shape of the workpiece appearing in the two-dimensional model.

A program according to the present invention is a program executed by a computer for assigning a machining cycle to a workpiece. The program causes the computer to perform: generating, from a three-dimensional model of a workpiece extending about a predetermined axis, a two-dimensional model obtained by cutting the three-dimensional model along a plane including the predetermined axis; and assigning a machining cycle to the workpiece based on a contour shape of the workpiece appearing in the two-dimensional model.

### ADVANTAGEOUS EFFECTS OF INVENTION

According to the present invention, an information processing apparatus, a method of assigning a machining cycle, and a program can be provided that easily and appropriately assign a machining cycle.

### BRIEF DESCRIPTION OF DRAWINGS

Fig. 1 is a front view of a machine tool.
Fig. 2 is a block diagram showing an information processing apparatus in Embodiment 1 of the present invention.
Fig. 3 is a perspective view showing an example three-dimensional model of a workpiece.
Fig. 4 is a view showing a two-dimensional model of the workpiece generated from the three-dimensional model in Fig. 3.
Fig. 5 is a view showing the two-dimensional model of the workpiece in a range surrounded by a chain double-dashed line V in Fig. 4.
Fig. 6 is a table showing sections identified in the two-dimensional model in Figs. 4 and 5, and start points and end points of the respective sections.
Fig. 7 is a table showing machining cycles and workpiece spindles assigned to the respective sections in Fig. 6.
Fig. 8 is a view showing a contour shape of the workpiece after the interpolation.
Fig. 9 is a table showing a machining cycle and a workpiece spindle assigned to the contour shape of the workpiece after the interpolation.
Fig. 10 is a table showing machining cycles and workpiece spindles finally assigned to the contour shapes of the workpiece.
Fig. 11 is a flowchart showing steps of a method of assigning a machining cycle in the embodiment of the present invention.
Fig. 12 is a view for illustrating a first step of interpolating a section with a groove machining cycle assigned thereto (an outer diameter groove formed only of simple line segments).
Fig. 13 is a view for illustrating a second step of interpolating the section with the groove machining cycle assigned thereto (the outer diameter groove formed only of simple line segments).
Fig. 14 is a view for illustrating a first step of interpolating a section with a groove machining cycle assigned thereto (an outer diameter groove including a curve).
Fig. 15 is another view for illustrating a second step of interpolating the section with the groove machining cycle assigned thereto (the outer diameter groove including a curve).

### DESCRIPTION OF EMBODIMENTS

Embodiments of the present invention will be described with reference to the drawings. In the drawings referred to below, the same or corresponding members are denoted by the same numbers.

### (Embodiment 1)

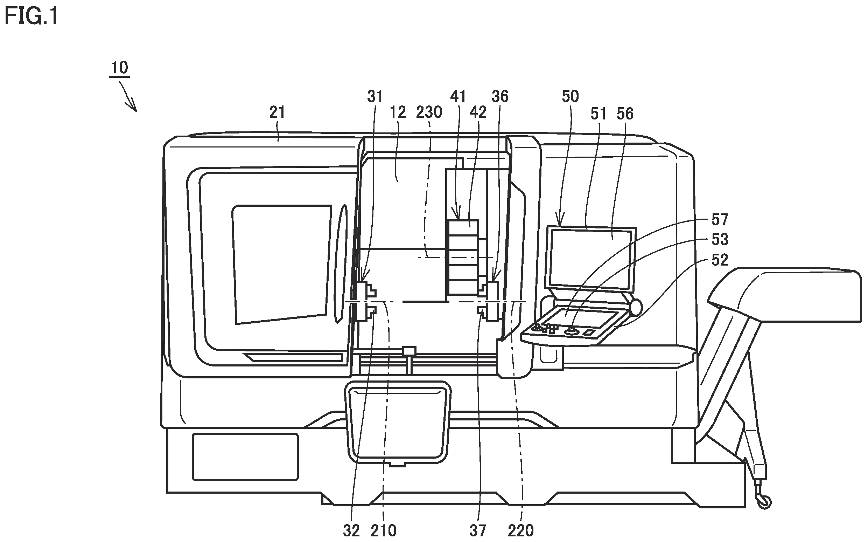

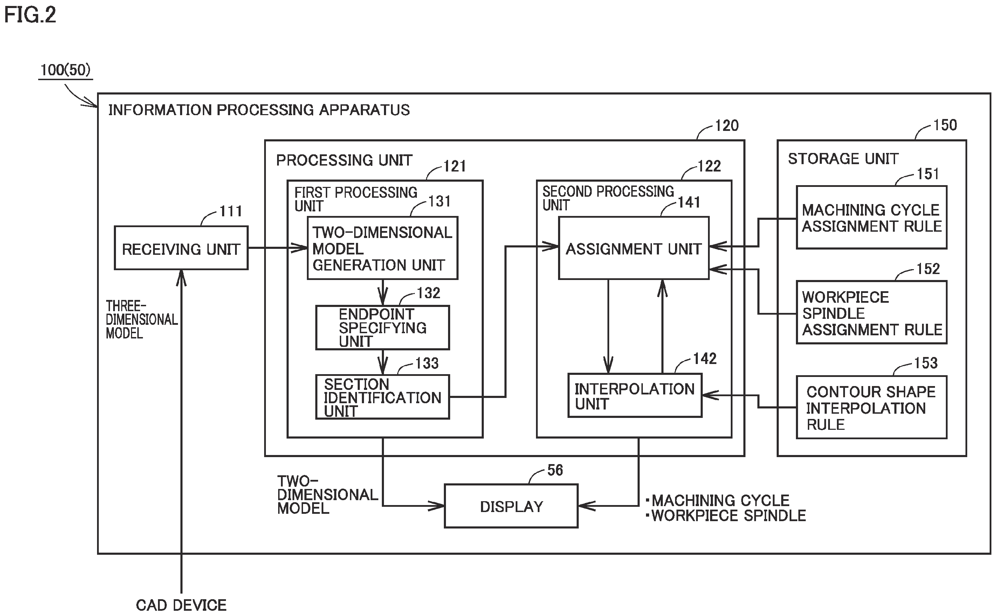

Fig. 1 is a front view of a machine tool. Fig. 2 is a block diagram showing an information processing apparatus in Embodiment 1 of the present invention. Referring to Figs. 1 and 2, an information processing apparatus 100 in the present embodiment is mounted on a machine tool 10.

As shown in Fig. 1, machine tool 10 is a lathe equipped with a turning function for workpiece machining by bringing a tool into contact with a rotating workpiece. Machine tool 10 is a numerically controlled (NC) machine tool in which various operations for workpiece machining are automated by computer-aided numerical control.

In the present specification, an axis extending in an axial direction of a rotation axis of a workpiece is referred to as a "Z-axis", and an axis extending in a radial direction of the rotation axis of the workpiece is referred to as an "X-axis".

Machine tool 10 includes a left workpiece spindle 31, a right workpiece spindle 36, a tool rest 41, and a cover body 21. Left workpiece spindle 31, right workpiece spindle 36, and tool rest 41 are disposed in a machining area 12. Machining area 12 is a space where a workpiece is machined, and is sealed by cover body 21 to prevent foreign matter, such as chips or cutting oil, accompanying the workpiece machining from leaking out of machining area 12.

Left workpiece spindle 31 and right workpiece spindle 36 are capable of holding a workpiece. Left workpiece spindle 31 is driven to rotate by a motor about a rotation center axis 210, which is parallel to the Z-axis. Left workpiece spindle 31 includes a chuck mechanism having a plurality of jaw portions 32 for detachably holding a workpiece. Each jaw portion 32 is driven to slide in a radial direction of rotation center axis 210 by hydraulic pressure or the like. The plurality of jaw portions 32 grip an outer peripheral surface of the workpiece by sliding radially inward of rotation center axis 210, or grip an inner peripheral surface of the workpiece by sliding radially outward of rotation center axis 210.

Right workpiece spindle 36 is disposed to face left workpiece spindle 31 in the Z-axis direction. Right workpiece spindle 36 is driven to rotate by a motor about a rotation center axis 220, which is parallel to the Z-axis and extends in a straight line with rotation center axis 210. Right workpiece spindle 36 includes a chuck mechanism having a plurality of jaw portions 37 for detachably holding a workpiece. The plurality of jaw portions 37 correspond to the plurality of jaw portions 32 in left workpiece spindle 31.

Left workpiece spindle 31 is fixed. Right workpiece spindle 36 is movable in the Z-axis direction by various feed mechanisms, guide mechanisms, and motors.

Tool rest 41 is capable of holding a tool. Tool rest 41 is of a so-called turret type, in which a plurality of tools are radially attached and which performs swivel indexing.

Tool rest 41 includes a swivel portion 42. Swivel portion 42 is capable of swiveling about a swiveling center axis 230, which is parallel to the Z-axis. Swivel portion 42 has a disk shape in which an axial direction of swiveling center axis 230 is a thickness direction as a whole. A plurality of tools are held on an outer peripheral surface of swivel portion 42 while being aligned in a circumferential direction of swiveling center axis 230. Along with swiveling of swivel portion 42, the tools move in the circumferential direction of swiveling center axis 230, and a tool to be used for workpiece machining is indexed at a position of a predetermined angle in the circumferential direction of swiveling center axis 230.

Tool rest 41 is movable in the X-axis direction and the Z-axis direction by various feed mechanisms, guide mechanisms, and motors.

Machine tool 10 further includes an operation panel 50. Operation panel 50 is a general-purpose computer and corresponds to information processing apparatus 100 in the present embodiment. Operation panel 50 includes an upper panel 51 and a lower panel 52. Upper panel 51 includes a display (touch screen) 56, which displays manuals or various application screens and is operated when an application is used. Lower panel 52 includes a display (touch screen) 57, which displays an operating state of machine tool 10 or a machining state of a workpiece and is operated when machine tool 10 is operated, and an operation unit 53, such as a button or a switch, which is operated when machine tool 10 is operated.

Machine tool 10 may include only one workpiece spindle. Further, the machine tool on which the information processing apparatus in the present invention is mounted is not limited to a lathe, and may be, for example, a multi-tasking machine equipped with both a milling function for machining a workpiece by bringing a rotating tool into contact with a stationary workpiece and a turning function for machining a workpiece by bringing a tool into contact with a rotating workpiece. Further, the information processing apparatus in the present invention may be a computer provided independently of a machine tool. In this case, the information processing apparatus may be configured to be capable of communicating with the machine tool wirelessly or by wire.

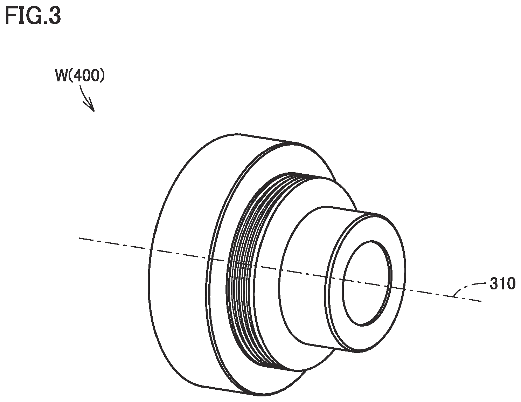

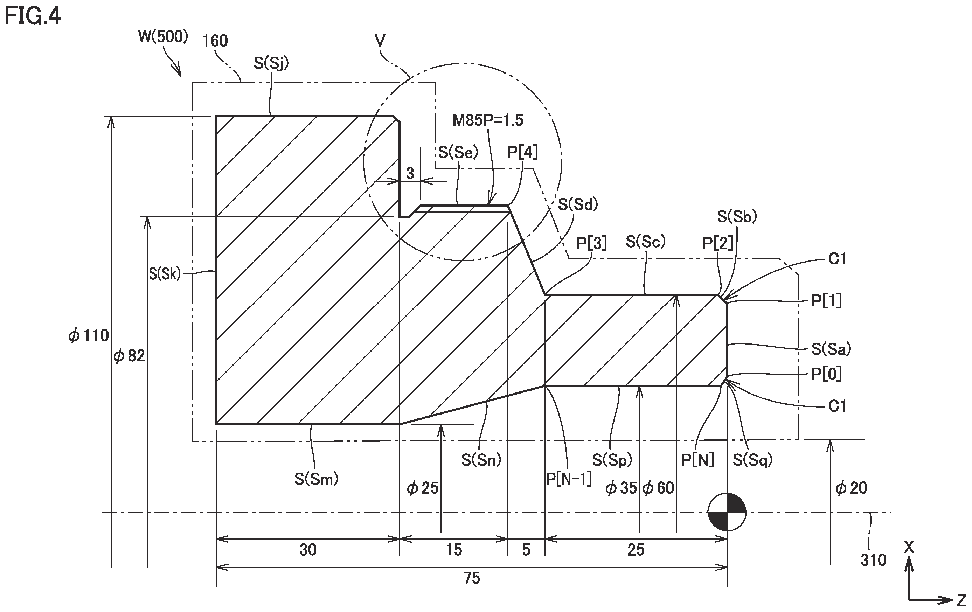

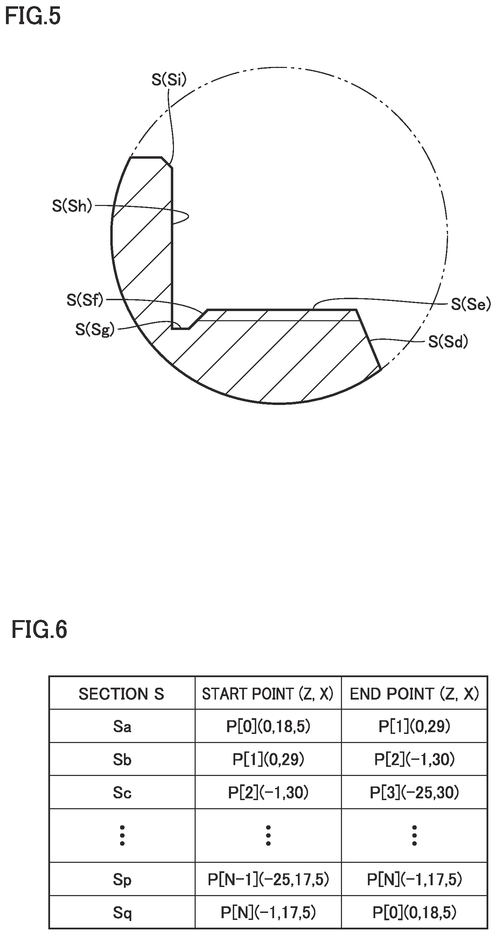

Fig. 3 is a perspective view showing an example three-dimensional model of a workpiece. Fig. 4 is a view showing a two-dimensional model of the workpiece generated from the three-dimensional model in Fig. 3. Fig. 5 is a view showing the two-dimensional model of the workpiece in a range surrounded by a chain double-dashed line V in Fig. 4.

Referring to Figs. 2 to 5, each component of information processing apparatus 100 is realized by hardware including a computing unit such as a central processing unit (CPU) and various computer processors, a storage device such as a memory or a storage, and wired or wireless communication lines connecting these, and software stored in the storage device and supplying processing commands to the computing unit. A computer program may be formed of a device driver, an operating system, various application programs located higher than these, or a library providing common functions to these programs. Each block described below represents a functional block.

Information processing apparatus 100 includes a receiving unit 111, a processing unit 120, and a storage unit 150.

Receiving unit 111 receives a three-dimensional model 400 of a workpiece W extending about a predetermined axis 310. Processing unit 120 generates a two-dimensional model 500 obtained by cutting three-dimensional model 400 along a plane including predetermined axis 310, and assigns a machining cycle to workpiece W based on a contour shape of workpiece W appearing in two-dimensional model 500.

Storage unit 150 stores various program modules. A processor of information processing apparatus 100 realizes functions of the respective units by executing the various program modules.

The program causes information processing apparatus 100, which is a computer, to perform: generating, from three-dimensional model 400 of workpiece W extending about predetermined axis 310, two-dimensional model 500 obtained by cutting three-dimensional model 400 along a plane including predetermined axis 310; and assigning a machining cycle to workpiece W based on a contour shape of workpiece W appearing in two-dimensional model 500.

Storage unit 150 further stores a machining cycle assignment rule 151, a workpiece spindle assignment rule 152, and a contour shape interpolation rule 153.

In machining cycle assignment rule 151, a rule for processing unit 120 to assign a machining cycle to workpiece W based on the contour shape of workpiece W is defined. In workpiece spindle assignment rule 152, a rule for processing unit 120 to assign any one of left workpiece spindle 31 and right workpiece spindle 36 to machining of the contour shape of workpiece W is defined. In contour shape interpolation rule 153, a rule for processing unit 120 to interpolate the contour shape of workpiece W is defined. Specific contents of machining cycle assignment rule 151, workpiece spindle assignment rule 152, and contour shape interpolation rule 153 will be described later.

Receiving unit 111 receives three-dimensional model 400 of workpiece W generated by a computer aided design (CAD) device. Three-dimensional model 400 includes a three-dimensional shape of workpiece W and predetermined axis 310 corresponding to a center axis of the three-dimensional shape of workpiece W. Predetermined axis 310 may be a reference line during drawing of the three-dimensional shape of workpiece W by the CAD device. A thread portion of workpiece W may be shown as a three-dimensional shape of workpiece W, or may be shown as additional information associated with the three-dimensional shape of workpiece W, in three-dimensional model 400. Receiving unit 111 outputs the received three-dimensional model 400 of workpiece W to processing unit 120.

Three-dimensional model 400 includes shape information for representing a three-dimensional model such as points, edges, and surfaces. For example, the edge is represented by a position of a start point (X1, Y1, Z1) and a position of an end point (X2, Y2, Z2). A circular arc is represented by positions of a start point, an end point, and a center, a normal vector of a plane on which the circular arc is arranged, and a rotation direction of the circular arc. Since three-dimensional model 400 includes positions of shapes as data, one coordinate system is defined through such data.

Three-dimensional model 400 includes information on a rotation axis (corresponding to predetermined axis 310). For example, the rotation axis is represented by a reference point (X, Y, Z) of the rotation axis and a direction vector of the rotation axis. A coordinate system used is the above-described coordinate system defined in three-dimensional model 400.

In Fig. 3, an example of three-dimensional model 400 of workpiece W is shown. Three-dimensional model 400 extends about predetermined axis 310. The three-dimensional shape of workpiece W is obtained by turning of rotating a base material 160 of workpiece W, shown by a chain double-dashed line in Fig. 4, about predetermined axis 310 and bringing a tool into contact with base material 160. A reference point (0, 0, 0) of the rotation axis (predetermined axis 310) and a direction vector (0, 0, 1) of the rotation axis (predetermined axis 310) are defined.

Processing unit 120 includes a first processing unit 121 and a second processing unit 122. To first processing unit 121, three-dimensional model 400 of workpiece W from receiving unit 111 is input. Processing unit 120 (first processing unit 121) specifies an endpoint P included in the contour shape of workpiece W, and assigns a machining cycle for each section S between adjacent endpoints.

First processing unit 121 includes a two-dimensional model generation unit 131, an endpoint specifying unit 132, and a section identification unit 133.

Two-dimensional model generation unit 131 causes predetermined axis 310 of three-dimensional model 400 to correspond to rotation center axis 210 of left workpiece spindle 31 and rotation center axis 220 of right workpiece spindle 36 in machine tool 10. Two-dimensional model generation unit 131 generates two-dimensional model 500 of workpiece W by cutting three-dimensional model 400 along a plane (X-axis-Z-axis plane) including predetermined axis 310. Two-dimensional model generation unit 131 outputs the generated two-dimensional model 500 of workpiece W to endpoint specifying unit 132.

In two-dimensional model 500, a contour shape of workpiece W obtained by turning appears. The contour shape of workpiece W may be formed of a closed-loop path (to which a contour shape including a through-hole extending on the Z-axis corresponds) or an open-loop path (to which a contour shape including no through-hole extending on the Z-axis corresponds) in a range of X ≥ 0 shown in Fig. 4.

In Fig. 4, the contour shape of two-dimensional model 500 of workpiece W is indicated by a solid line, and the contour shape of base material 160 of workpiece W before machining is indicated by a chain double-dashed line. In Fig. 4, the dimensions of two-dimensional model 500 are also indicated, with the origin defined as a point at which one end face of workpiece W in the Z-axis direction intersects predetermined axis 310.

Fig. 6 is a table showing sections identified in the two-dimensional model in Figs. 4 and 5, and start points and end points of the respective sections.

Referring to Figs. 2 to 6, endpoint specifying unit 132 specifies an endpoint P included in the contour shape of two-dimensional model 500. Endpoint P is a corner portion, for example, a point at which two straight lines having different inclinations intersect each other, a point at which two circular arcs having different curvatures intersect each other, or a point at which a straight line intersects a circular arc, in the X-axis-Z-axis coordinates. Endpoint specifying unit 132 outputs the specified endpoint P to section identification unit 133.

Section identification unit 133 identifies a section S between adjacent endpoints P in the contour shape of two-dimensional model 500.

As shown in Figs. 4 to 6, endpoint specifying unit 132 specifies an endpoint P[0], an endpoint P[1], an endpoint P[2], an endpoint P[3] ... an endpoint P[N-1], and an endpoint P[N] as endpoints P included in the contour shape of two-dimensional model 500. Endpoint P[0], endpoint P[1], endpoint P[2], endpoint P[3] ... endpoint P[N-1], and endpoint P[N] are arranged in the stated order on a path of the contour shape of two-dimensional model 500. In the present embodiment, since the contour shape of two-dimensional model 500 is formed of a closed-loop path, endpoint P[N] and endpoint P[0] are adjacent to each other.

Section identification unit 133 identifies a section Sa, a section Sb, a section Sc, a section Sd, a section Se, a section Sf, a section Sg, a section Sh, a section Si, a section Sj, a section Sk, a section Sm, a section Sn, a section Sp, and a section Sq as sections S between adjacent endpoints P. Section Sa, section Sb, section Sc, section Sd, section Se, section Sf, section Sg, section Sh, section Si, section Sj, section Sk, section Sm, section Sn, section Sp, and section Sq are arranged in the stated order on the path of the contour shape of two-dimensional model 500.

Section Sa is a section between endpoint P[0] and endpoint P[1], and corresponds to a contour shape of a right end face of workpiece W extending in the X-axis direction. Section Sb is a section between endpoint P[1] and endpoint P[2], and corresponds to a contour shape of a chamfered portion of workpiece W. Section Sc is a section between endpoint P[2] and endpoint P[3], and corresponds to a contour shape of an outer peripheral surface of workpiece W extending in the Z-axis direction.

Section Sd corresponds to a contour shape of the outer peripheral surface of workpiece W extending in an oblique direction with respect to the Z-axis direction and the X-axis direction. Section Se corresponds to a contour shape of the thread portion of workpiece W. Section Sf corresponds to a contour shape of a groove side surface of workpiece W extending in an oblique direction with respect to the Z-axis direction and the X-axis direction. Section Sg corresponds to a contour shape of a groove bottom surface of workpiece W extending in the Z-axis direction. Section Sh corresponds to a contour shape of the groove side surface of workpiece W extending in the X-axis direction. Section Si corresponds to a contour shape of a chamfered portion of workpiece W.

Section Sj corresponds to a contour shape of the outer peripheral surface of workpiece W extending in the Z-axis direction. Section Sk corresponds to a contour shape of a left end face of workpiece W extending in the X-axis direction. Section Sm corresponds to a contour shape of an inner peripheral surface of workpiece W extending in the Z-axis direction. Section Sn corresponds to a contour shape of the inner peripheral surface of workpiece W extending in an oblique direction with respect to the Z-axis direction and the X-axis direction.

Section Sp is a section between endpoint P[N-1] and endpoint P[N], and corresponds to a contour shape of the inner peripheral surface of workpiece W extending in the Z-axis direction. Section Sq is a section between endpoint P[N] and endpoint P[0], and corresponds to a contour shape of the chamfered portion of workpiece W. An end point of section Sq corresponds to a start point of section Sa. A direction in which sections S (Sa to Sq) are arranged in order may be standardized in one direction such as counterclockwise. The first section Sa may be standardized so as to be arranged at a position at which the Z-axis coordinate is maximal.

First processing unit 121 outputs two-dimensional model 500 to second processing unit 122 together with information on the identified sections S.

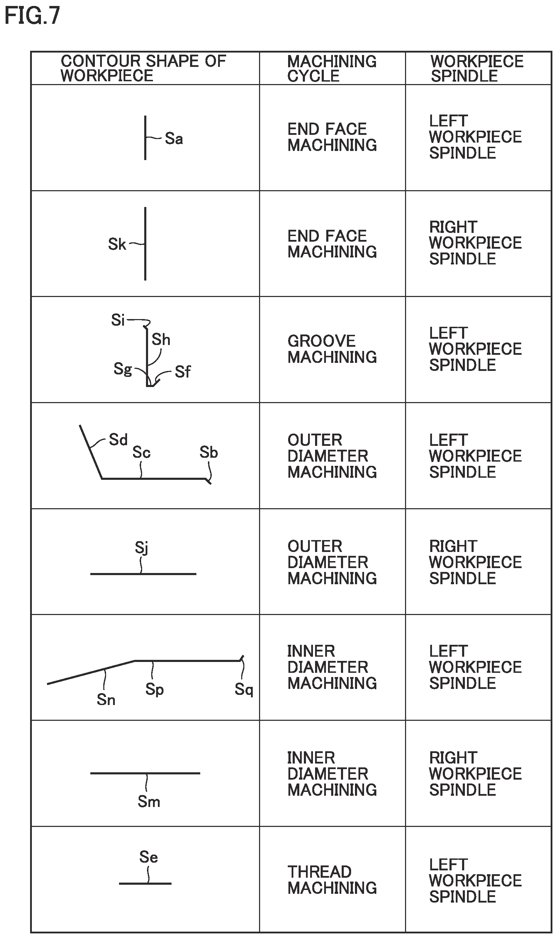

Fig. 7 is a table showing machining cycles and workpiece spindles assigned to the respective sections in Fig. 6. Referring to Figs. 2 to 7, second processing unit 122 includes an assignment unit 141 and an interpolation unit 142.

Assignment unit 141 reads machining cycle assignment rule 151 from storage unit 150. Assignment unit 141 assigns a machining cycle to each section S of sections Sa to Sq according to the correspondence relationship between machining cycles and contour shapes defined in machining cycle assignment rule 151. The machining cycle includes at least one of outer diameter machining, inner diameter machining, end face machining, groove machining, and thread machining.

An example of the correspondence relationship between machining cycles and contour shapes defined in machining cycle assignment rule 151 is as follows.
(1) Inner diameter machining: a contour shape facing predetermined axis 310 in the X-axis direction
(2) Outer diameter machining: a contour shape arranged opposite to predetermined axis 310 with two-dimensional model 500 in between in the X-axis direction
(3) End face machining: a contour shape arranged at an end portion in the Z-axis direction and extending in a direction intersecting the Z-axis direction
(4) Groove machining: a contour shape forming a recessed groove shape from a contour shape assigned to inner diameter machining, outer diameter machining, or end face machining (cutting edge dimensions of various tools used for groove machining may be taken into consideration)
(5) Thread machining: a contour shape forming a thread shape, or a contour shape in which a thread shape is indicated by additional information

As shown in Fig. 7, assignment unit 141 checks the contour shapes of sections Sa to Sq against the correspondence relationship between machining cycles and contour shapes described above, thereby assigning "end face machining" to section Sa and section Sk, assigns "groove machining" to section Sf, section Sg, section Sh, and section Si, assigns "outer diameter machining" to section Sb, section Sc, section Sd, and section Sj, assigns "inner diameter machining" to section Sm, section Sn, section Sp, and section Sq, and assigns "thread machining" to section Se.

Assignment unit 141 assigns any one of left workpiece spindle 31 and right workpiece spindle 36 as a workpiece spindle for holding workpiece W during machining of each section S of sections Sa to Sq according to a correspondence relationship between workpiece spindles and contour shapes defined in workpiece spindle assignment rule 152.

An example of the correspondence relationship between workpiece spindles and contour shapes defined in workpiece spindle assignment rule 152 is as follows.
(1) Left workpiece spindle 31:
   (a) A contour shape arranged on the +Z-axis direction side with respect to a minimum inner diameter portion where the distance from predetermined axis 310 in the X-axis direction is minimal in the assignment of inner diameter machining.
   (b) A contour shape arranged on the +Z-axis direction side with respect to a maximum outer diameter portion where a distance from predetermined axis 310 in the X-axis direction is maximal in the assignment of outer diameter machining.
   (c) A contour shape arranged at an end portion in the +Z-axis direction in the assignment of end face machining.
   (d) A position of the contour shape is determined according to the rules (a) to (c) above in the assignment of groove machining and in the assignment of thread machining.
(2) Right workpiece spindle 36:
   (a) A contour shape arranged on the -Z-axis direction side with respect to the minimum inner diameter portion where the distance from predetermined axis 310 in the X-axis direction is minimal in the assignment of inner diameter machining.
   (b) A contour shape arranged on the -Z-axis direction side with respect to the maximum outer diameter portion where the distance from predetermined axis 310 in the X-axis direction is maximal in the assignment of outer diameter machining.
   (c) A contour shape arranged at an end portion in the -Z-axis direction in the assignment of end face machining.
   (d) A position of the contour shape is determined according to the rules (a) to (c) above in the assignment of groove machining and in the assignment of thread machining.

Assignment unit 141 checks the contour shapes of sections Sa to Sq against the correspondence relationship between workpiece spindles and contour shapes described above, thereby assigning left workpiece spindle 31 as a workpiece spindle for holding workpiece W during machining of section Sa, section Sf, section Sg, section Sh, section Si, section Sb, section Sc, section Sd, section Sn, section Sp, section Sq, and section Se, and assigns right workpiece spindle 36 as a workpiece spindle for holding workpiece W during machining of section Sk, section Sj, and section Sm.

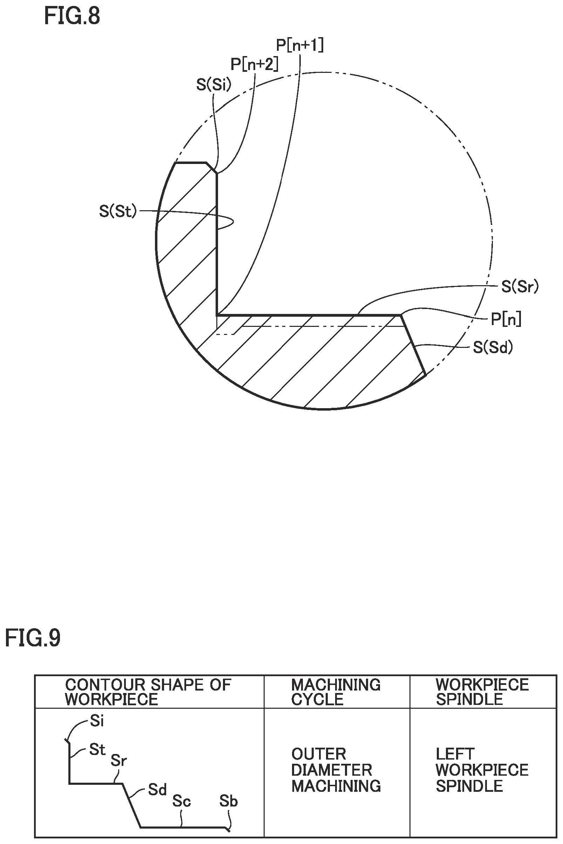

Fig. 8 is a view showing a contour shape of the workpiece after the interpolation. In Fig. 8, the contour shape of workpiece W in a range corresponding to Fig. 5 is shown. Fig. 9 is a table showing a machining cycle and a workpiece spindle assigned to the contour shape of the workpiece after the interpolation.

Referring to Figs. 2 to 9, processing unit 120 (second processing unit 122) interpolates the contour shape of workpiece W in a specific section S with groove machining or thread machining assigned thereto, and assigns outer diameter machining, inner diameter machining, or end face machining to the contour shape of workpiece W after the interpolation.

Interpolation unit 142 extracts section Se with thread machining assigned thereto, and section Sf, section Sg, section Sh, and section Si with groove machining assigned thereto, as the specific sections S described above. Interpolation unit 142 reads contour shape interpolation rule 153 from storage unit 150. Interpolation unit 142 interpolates the contour shape of section Se according to a thread shape interpolation rule defined in contour shape interpolation rule 153, and interpolates contour shapes of section Sf, section Sg, section Sh, and section Si according to a groove shape interpolation rule defined in contour shape interpolation rule 153.

An example of the thread shape and groove shape interpolation rules defined in contour shape interpolation rule 153 is as follows.
(1) Interpolation of thread shape: draw a straight line so as to fill a root portion of a thread shape (rewrite a thread shape into a straight line connecting crest portions of threads and extending in the Z-axis direction).
(2) Interpolation of groove shape: draw a straight line so as to fill a recessed portion formed by a groove shape (extend, from a start point or an end point of a specific section S with groove machining assigned thereto, a contour shape of a section S contiguous to the start point or the end point).

As shown in Figs. 5 and 8, the contour shape of workpiece W after the interpolation includes a section Sr and a section St instead of section Se, section Sf, section Sg, and section Sh. Section Sr is a section between end point P[n] and endpoint P[n+1], and corresponds to a contour shape of the outer peripheral surface of workpiece W extending in the Z-axis direction. Endpoint P[n] is an endpoint of section Sd. Endpoint P[n+1] is a point on a straight line of section Sh. Section St is a section between endpoint P[n+1] and endpoint P[n+2], and corresponds to a contour shape of a rising surface of workpiece W extending in the X-axis direction. Endpoint P[n+2] is a start point of section Si. The contour shape of section Sr after the interpolation extends so as to fill the root portion of the thread shape in section Se in Fig. 5 and the recessed portions of the groove shapes in section Sf, section Sg, section Sh, and section Si in Fig. 5.

Assignment unit 141 assigns outer diameter machining, inner diameter machining, or end face machining to the contour shape of workpiece W after the interpolation according to the correspondence relationship between machining cycles and contour shapes defined in machining cycle assignment rule 151. As shown in Fig. 9, assignment unit 141 assigns outer diameter machining to section Sr and section St, continuously from section Sb, section Sc, and section Sd.

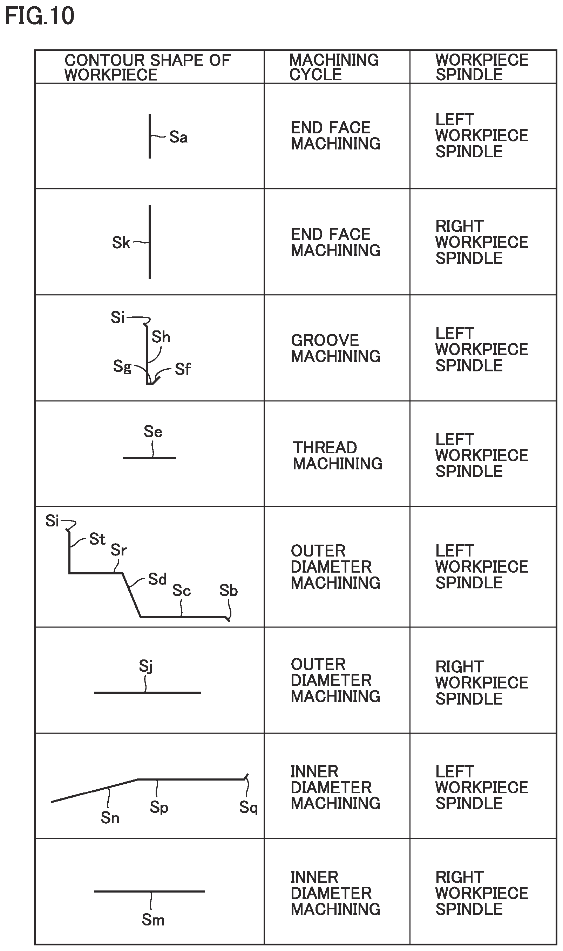

Fig. 10 is a table showing machining cycles and workpiece spindles finally assigned to the contour shape of the workpiece. Referring to Fig. 10, processing unit 120 causes a display 56 to display machining cycles and workpiece spindles finally assigned to workpiece W together with the contour shape of two-dimensional model 500.

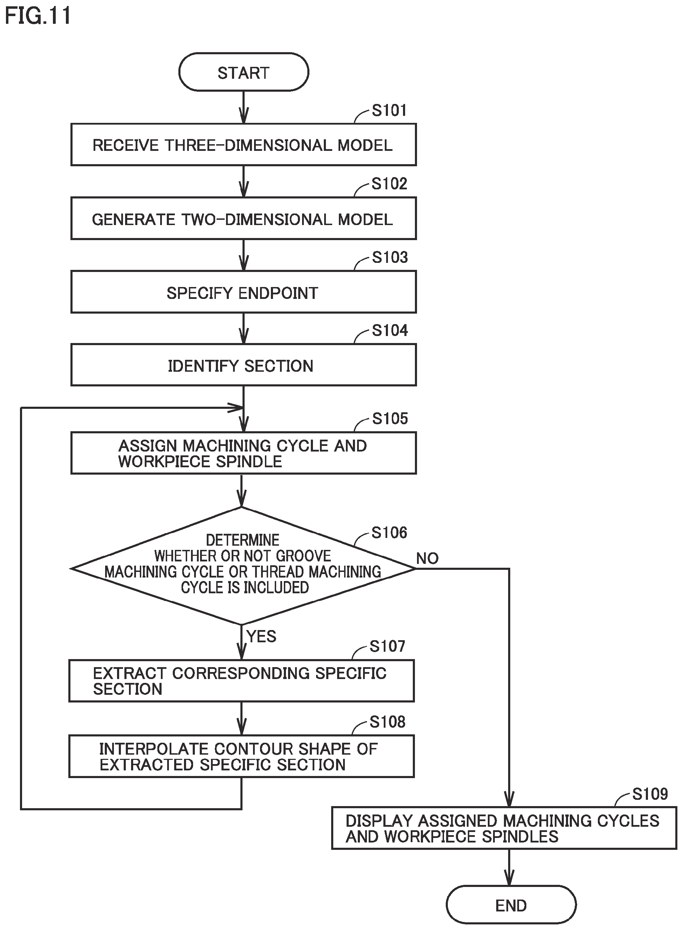

Fig. 11 is a flowchart showing steps of a method of assigning a machining cycle in the embodiment of the present invention.

Referring to Figs. 2 and 11, information processing apparatus 100 receives three-dimensional model 400 of workpiece W (S101). In this step, an operator inputs three-dimensional model 400 generated by a CAD device to information processing apparatus 100. Receiving unit 111 receives three-dimensional model 400.

Subsequently, information processing apparatus 100 generates two-dimensional model 500 (S102). In this step, two-dimensional model generation unit 131 generates two-dimensional model 500 of workpiece W by cutting three-dimensional model 400 along a plane including predetermined axis 310.

Subsequently, information processing apparatus 100 specifies endpoint P (S103). In this step, endpoint specifying unit 132 specifies endpoint P[0], endpoint P[1], endpoint P[2], endpoint P[3]... endpoint P[N-1], and endpoint P[N] included in the contour shape of two-dimensional model 500.

Subsequently, information processing apparatus 100 identifies section S (S104). In this step, section identification unit 133 identifies section Sa, section Sb, section Sc, section Sd, section Se, section Sf, section Sg, section Sh, section Si, section Sj, section Sk, section Sm, section Sn, section Sp, and section Sq as sections S between adjacent endpoints P in the contour shape of two-dimensional model 500.

Subsequently, information processing apparatus 100 assigns a machining cycle and a workpiece spindle (S105). In this step, assignment unit 141 assigns a machining cycle to each section S identified in the step of S104 according to the correspondence relationship between machining cycles and contour shapes defined in machining cycle assignment rule 151. Assignment unit 141 assigns a workpiece spindle for holding workpiece W during machining of each section S identified in the step of S104 from left workpiece spindle 31 and right workpiece spindle 36 according to the correspondence relationship between workpiece spindles and contour shapes defined in workpiece spindle assignment rule 152.

Subsequently, information processing apparatus 100 determines whether or not a groove machining cycle or a thread machining cycle is included in the contour shape of workpiece W (S106). In this step, when information processing apparatus 100 determines that a groove machining cycle and a thread machining cycle are not included, the process proceeds to the step of S109, which will be described later.

When information processing apparatus 100 determines in the step of S106 that a groove machining cycle or a thread machining cycle is included, information processing apparatus 100 extracts a corresponding specific section (S107) and interpolates a contour shape of the extracted specific section (S108). In this step, interpolation unit 142 extracts section Se with thread machining assigned thereto, and section Sf, section Sg, section Sh, and section Si with groove machining assigned thereto. Interpolation unit 142 interpolates the contour shape of section Se according to the thread shape interpolation rule defined in contour shape interpolation rule 153, and interpolates the contour shapes of section Sf, section Sg, section Sh, and section Si according to the groove shape interpolation rule defined in contour shape interpolation rule 153.

Subsequently, information processing apparatus 100 returns to the step of S105 and assigns a machining cycle to the contour shape of workpiece W after the interpolation. Information processing apparatus 100 then determines whether or not a groove machining cycle or a thread machining cycle is included in the contour shape of workpiece W after the interpolation (S106), and when determining that a groove machining cycle and a thread machining cycle are not included, information processing apparatus 100 proceeds to the step of S109.

Subsequently, information processing apparatus 100 displays the assigned machining cycles and workpiece spindles on display 56 together with the contour shape of workpiece W (S110). The operator proceeds to generation of an NC program by approving the machining cycles and workpiece spindles displayed on display 56 through operation of operation panel 50. When the operator does not approve the machining cycles and workpiece spindles displayed on display 56, the operator may correct the assignment of the machining cycle of each section S through operation of operation panel 50.

In information processing apparatus 100 and the method of assigning a machining cycle in the embodiment of the present invention configured as described above, two-dimensional model 500 obtained by cutting three-dimensional model 400 of workpiece W along a plane including predetermined axis 310 is generated, and machining cycles are assigned to workpiece W based on the contour shape of workpiece W appearing in the generated two-dimensional model 500. With such a configuration, since the relationship between a contour shape of a workpiece W and a machining cycle used for machining the contour shape can be uniquely determined, a machining cycle corresponding to the contour shape of workpiece W appearing in two-dimensional model 500 can be assigned to workpiece W. Thus, machining cycles can be easily and appropriately assigned.

Further, processing unit 120 specifies an endpoint P included in the contour shape of workpiece W, and assigns a machining cycle for each section S between adjacent endpoints P. With such a configuration, by regarding a section S between endpoints P included in the contour shape of workpiece W as a unit for assigning a machining cycle, machining cycles can be more easily and appropriately assigned.

Further, the machining cycle includes at least one of outer diameter machining, inner diameter machining, end face machining, groove machining, and thread machining. With such a configuration, machining cycles such as outer diameter machining, inner diameter machining, end face machining, groove machining, or thread machining can be easily and appropriately assigned to the contour shape of workpiece W.

Further, processing unit 120 interpolates the contour shape of workpiece W in a specific section S with groove machining or thread machining assigned thereto, and assigns outer diameter machining, inner diameter machining, or end face machining to the contour shape of workpiece W after the interpolation. With such a configuration, outer diameter machining, inner diameter machining, or end face machining required in a stage previous to groove machining or thread machining can be assigned to the contour shape of workpiece W.

### (Embodiment 2)

In the present embodiment, another embodiment of each step in Fig. 11 will be described. Referring to Figs. 4 and 11, first, the step of assigning machining cycles (S105) will be described.

Information processing apparatus 100 (assignment unit 141) determines whether or not information indicating that each section S has information that the section is a thread (by a user, manually set using a graphical user interface (GUI) or acquired from additional information associated with a three-dimensional shape of workpiece W). Information processing apparatus 100 (assignment unit 141) assigns a cycle of thread machining to a section S having information indicating that the section is a thread.

Subsequently, information processing apparatus 100 (assignment unit 141) determines whether or not each remaining section S corresponds to a line segment where a Z-axis coordinate is a maximum value or a minimum value and which is parallel to the X-axis. Information processing apparatus 100 (assignment unit 141) assigns a machining cycle of end face machining to a corresponding section S.

Subsequently, information processing apparatus 100 (assignment unit 141) determines whether or not each remaining section S corresponds to a line segment where an X coordinate is zero and which is parallel to the Z-axis direction. Information processing apparatus 100 (assignment unit 141) does not assign a machining cycle to a corresponding section S (corresponding to a section requiring no machining).

Subsequently, information processing apparatus 100 (assignment unit 141) determines whether or not each remaining section S is a groove machining portion (may determine whether the section is an end face, an outer diameter, or an inner diameter, and further in consideration of a machining direction, or may also determine using a shape recognition module), and assigns a cycle of groove machining to a corresponding section S.

Subsequently, information processing apparatus 100 (assignment unit 141) determines whether each remaining section S is arranged on the outer side or the inner side of the contour shape of workpiece W in two-dimensional model 500. As an example, information processing apparatus 100 (assignment unit 141) divides the contour shape of workpiece W in two-dimensional model 500 into two between a maximum value and a minimum value of the Z-axis, and determines that a section S having a relatively large X-axis coordinate is arranged on the outside and a section S having a relatively small X-axis coordinate is arranged on the inside on Z-axis coordinate to be divided. Information processing apparatus 100 (assignment unit 141) assigns a cycle of outer diameter machining to a section S arranged on the outer side, and assigns a cycle of inner diameter machining to a section S arranged on the inner side.

Subsequently, the step of assigning a workpiece spindle (S105) will be described. For groove machining on an end face, information processing apparatus 100 (assignment unit 141) makes a determination according to a machining direction. Information processing apparatus 100 (assignment unit 141) assigns left workpiece spindle 31 when a tool axis direction is a +Z-axis direction, and assigns right workpiece spindle 36 when the tool axis direction is a -Z-axis direction.

For end face machining, information processing apparatus 100 (assignment unit 141) makes a determination based on the Z-axis coordinate. Information processing apparatus 100 (assignment unit 141) assigns left workpiece spindle 31 for end face machining where the Z-axis coordinate is a maximum value, and assigns right workpiece spindle 36 for end face machining where the Z-axis coordinate is a minimum value.

For inner diameter machining and outer diameter machining, a reference Z-axis coordinate is set in advance by a user. For example, in Fig. 4, the reference Z-axis coordinate may be set at a position of -45 mm. The reference Z-axis coordinate may be different between a set value in inner diameter machining and a set value in outer diameter machining. Information processing apparatus 100 (assignment unit 141) assigns left workpiece spindle 31 to machining on the positive side with respect to the reference Z-axis coordinate, and assigns right workpiece spindle 36 to machining on the negative side with respect to the reference Z-axis coordinate.

Subsequently, the step of interpolating a contour shape of a section S with a groove machining cycle assigned thereto (S108) will be described.

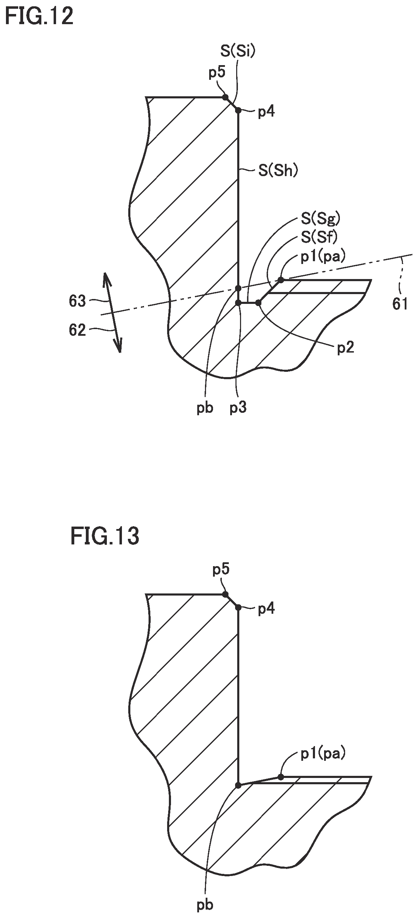

Figs. 12 and 13 are views for describing a step of interpolating a section with a groove machining cycle assigned thereto (an outer diameter groove formed only of simple line segments). In Figs. 12 and 13, it is assumed that an outer diameter groove formed only of simple line segments is interpolated in a workpiece held by left workpiece spindle 31.

Referring to Figs. 12 and 13, sections S (Sf to Si) with a groove machining cycle assigned thereto, which are to be interpolated, are shown. Section Sf is identified between endpoint p1 and endpoint p2, section Sg is identified between endpoint p2 and endpoint p3, section Sh is identified between endpoints p3 and p4, and section Si is identified between endpoint p4 and endpoint p5.

Information processing apparatus 100 (interpolation unit 142) sets a maximum inclination of a section S (Sf to Si) to be interpolated. The maximum inclination may be set to zero in the Z-axis-X-axis coordinates, may be set by referring to a pocket angle of a tool, or may be manually set by a user.

Subsequently, information processing apparatus 100 (interpolation unit 142) determines, in the contour shape of section S (Sf to Si), a tangency point pa if there is a point at which the contour shape is tangent to a straight line of the set maximum inclination. Information processing apparatus 100 (interpolation unit 142) specifies a straight line 61, which is tangent to the contour shape at tangency point pa and has the set maximum inclination, and a first intersection pb at which straight line 61 first intersects a contour shape contiguous from tangency point pa.

Subsequently, information processing apparatus 100 (interpolation unit 142) divides section S (Sf to Si) into section Sf, section Sg, and section Sh (endpoint p3 to first intersection pb), and section Sh (first intersection pb to endpoint p4) and section Si, by first intersection pa. Information processing apparatus 100 (interpolation unit 142) interpolates section Sf, section Sg, and section Sh (endpoint p3 to first intersection pb) by straight line 61.

Subsequently, information processing apparatus 100 (interpolation unit 142) determines whether a contour shape contiguous from first intersection pb is arranged in a first range 62 greater than or equal to the set maximum inclination in a second range 63 less than the set maximum inclination.

Information processing apparatus 100 (interpolation unit 142) determines that the contour shape contiguous from first intersection pb is arranged in second range 63. In this case, information processing apparatus 100 (interpolation unit 142) maintains the contour shapes of section Sh (first intersection pb to endpoint p4) and section Si. As a result, as shown in Fig. 13, section S (Sf to Si) is interpolated to a contour shape that passes through endpoint p1 (tangency point pa), first intersection pb, endpoint p4, and endpoint p5 in order.

In contrast, when information processing apparatus 100 (interpolation unit 142) determines that the contour shape contiguous from first intersection pb is arranged in first range 62 greater than or equal to the set maximum inclination, a straight line, which passes through a start point of the contour shape contiguous from first intersection pb and has the set maximum inclination, and a second intersection, where the straight line first intersects the contour shape contiguous from first intersection pb, are specified. Thereafter, the steps described above are repeated.

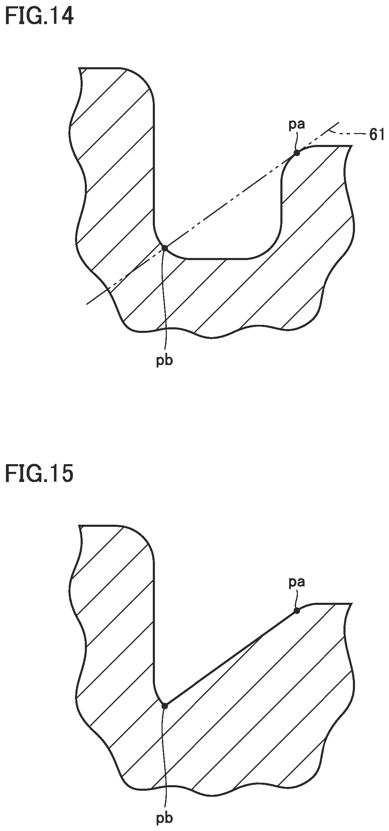

Figs. 14 and 15 are views for describing a step of interpolating a section with a groove machining cycle assigned thereto (an outer diameter groove including a curve). In Figs. 14 and 15, it is assumed that an outer diameter groove including a curve is interpolated in a workpiece held by left workpiece spindle 31.

Referring to Figs. 14 and 15, even when a section S to be interpolated is an outer diameter groove including a curve, information processing apparatus 100 (interpolation unit 142) determines, in the contour shape of section S, a tangency point pa if there is a point at which the contour shape is tangent to a straight line of a maximum inclination. Information processing apparatus 100 (interpolation unit 142) specifies straight line 61, which is tangent to the contour shape at tangency point pa and has the maximum inclination, and first intersection pb where straight line 61 first intersects a contour shape contiguous from tangency point pa. Other steps are the same as the steps described with reference to Fig. 12 and Fig. 13.

In the interpolation of section S (Sf to Si) shown in Fig. 8, the maximum inclination of section S to be interpolated is set to 0°. Although the case where an outer diameter groove of a workpiece held by left workpiece spindle 31 is interpolated is assumed in Figs. 12 to 15, a method similar to the above can also be applied to a case where a workpiece is held by right workpiece spindle 36 or a case where an inner diameter groove is interpolated.

The information processing apparatus, the method of assigning a machining cycle, and the program described above will be described from another point of view. The information processing apparatus includes: a receiving unit that receives a three-dimensional model of a workpiece extending about a predetermined axis, the three-dimensional model corresponding to a workpiece shape obtained by machining; and a processing unit that generates a two-dimensional model obtained by cutting the three-dimensional model along a plane including the predetermined axis and that assigns a machining cycle to the workpiece based on a contour shape of the workpiece appearing in the two-dimensional model. The processing unit interpolates the contour shape of the workpiece in a specific section with specific machining assigned thereto as a machining cycle, and assigns machining different from the specific machining to a post-interpolation contour shape of the workpiece after the interpolation.

Further, the specific machining is groove machining or thread machining. Machining different from the specific machining is outer diameter machining, inner diameter machining, or end face machining.

Further, the processing unit specifies an endpoint included in the contour shape of the workpiece, and assigns a machining cycle for each section between adjacent endpoints.

Further, the processing unit assigns any one of a first workpiece spindle capable of rotating a workpiece about a predetermined axis and a second workpiece spindle arranged to face the first workpiece spindle in an axial direction of the predetermined axis and capable of rotating the workpiece about the predetermined axis, as a workpiece spindle for holding the workpiece during machining of each section with a machining cycle assigned thereto.

A method of assigning a machining cycle includes: generating, from a three-dimensional model of a workpiece extending about a predetermined axis, the three-dimensional model corresponding to a workpiece shape obtained by machining, a two-dimensional model obtained by cutting the three-dimensional model along a plane including the predetermined axis; and assigning a machining cycle to the workpiece based on a contour shape of the workpiece appearing in the two-dimensional model. The assigning of a machining cycle to the workpiece includes interpolating the contour shape of the workpiece in a specific section with specific machining assigned thereto as a machining cycle, and assigning machining different from the specific machining to a post-interpolation contour shape of the workpiece after the interpolation.

A program is executed by a computer for assigning a machining cycle to a workpiece. The program causes the computer to perform: generating, from a three-dimensional model of a workpiece extending about a predetermined axis, a two-dimensional model obtained by cutting the three-dimensional model along a plane including the predetermined axis, the three-dimensional model corresponding to a workpiece shape obtained by machining; and assigning a machining cycle to the workpiece based on a contour shape of the workpiece appearing in the two-dimensional model. The assigning of a machining cycle to the workpiece includes interpolating the contour shape of the workpiece in a specific section with specific machining assigned thereto as a machining cycle, and assigning machining different from the specific machining to a post-interpolation contour shape of the workpiece after the interpolation.

The program may be recorded in a computer-readable storage medium. The computer-readable storage medium may be a non-transitory computer-readable storage medium.

The embodiments disclosed herein should be considered illustrative and non-restrictive in every respect. The scope of the present disclosure is defined by the claims rather than the above description and is intended to include any modifications within the scope and meaning equivalent to the terms of the claims.

### REFERENCE SIGNS LIST

10 machine tool; 12 machining area; 21 cover body; 31 left workpiece spindle; 32, 37 jaw portion; 36 right workpiece spindle; 41 tool rest; 42 swivel portion; 50 operation panel; 51 upper panel; 52 lower panel; 53 operation unit; 56, 57 display; 61 straight line; 62 first range; 63 second range; 100 information processing apparatus; 111 receiving unit; 120 processing unit; 121 first processing unit; 122 second processing unit; 131 two-dimensional model generation unit; 132 endpoint specifying unit; 133 section identification unit; 141 assignment unit; 142 interpolation unit; 150 storage unit; 151 machining cycle assignment rule; 152 workpiece spindle assignment rule; 153 contour shape interpolation rule; 160 base material; 210, 220 rotation center axis; 230 swiveling center axis; 310 predetermined axis; 400 three-dimensional model; 500 two-dimensional model; P endpoint; S, Sa, Sb, Sc, Sd, Se, Sf, Sg, Sh, Si, Sj, Sk, Sm, Sn, Sp, Sq, Sr, St, Sj section; W workpiece.

## Claims

1. An information processing apparatus comprising:
a receiving unit that receives a three-dimensional model of a workpiece extending about a predetermined axis; and
a processing unit that generates a two-dimensional model obtained by cutting the three-dimensional model along a plane including the predetermined axis and that assigns a machining cycle to the workpiece based on a contour shape of the workpiece appearing in the two-dimensional model.

2. The information processing apparatus according to claim 1, wherein the processing unit specifies an endpoint included in the contour shape of the workpiece, and assigns the machining cycle for each section between adjacent endpoints.

3. The information processing apparatus according to claim 1 or 2, wherein the machining cycle includes at least one of outer diameter machining, inner diameter machining, end face machining, groove machining, and thread machining.

4. The information processing apparatus according to claim 3, wherein the processing unit interpolates the contour shape of the workpiece in a specific section with the thread machining assigned thereto, and assigns the outer diameter machining or the inner diameter machining to the contour shape of the workpiece after the interpolation.

5. The information processing apparatus according to claim 3, wherein the processing unit interpolates the contour shape of the workpiece in a specific section with the groove machining assigned thereto, and assigns the outer diameter machining, the inner diameter machining, or the end face machining to the contour shape of the workpiece after the interpolation.

6. A method of assigning a machining cycle, the method comprising:
generating, from a three-dimensional model of a workpiece extending about a predetermined axis, a two-dimensional model obtained by cutting the three-dimensional model along a plane including the predetermined axis; and
assigning a machining cycle to the workpiece based on a contour shape of the workpiece appearing in the two-dimensional model.

7. A program executed by a computer for assigning a machining cycle to a workpiece, the program causing the computer to perform:
generating, from a three-dimensional model of a workpiece extending about a predetermined axis, a two-dimensional model obtained by cutting the three-dimensional model along a plane including the predetermined axis; and
assigning a machining cycle to the workpiece based on a contour shape of the workpiece appearing in the two-dimensional model.
